# FASCICULE DE BREVET EUROPEEN

(11) **EP 2 922 664 B1**
(45) Date de publication et mention de la délivrance du brevet: **22.05.2019**
(21) Numéro de dépôt: 13803159.6
(22) Date de dépôt: 20.11.2013
(51) Int. Cl.: B23P 19/04, B25B 27/12, B25B 27/00

(54) **CÔNE D'INTRODUCTION D'UN PISTON AVEC SES SEGMENTS DANS UN CYLINDRE DE MOTEUR DE VEHICULE**
EINFÜHRKONUS FÜR EINEN KOLBEN MIT SEINEN SEGMENTEN IN EINEM ZYLINDER EINES FAHRZEUGMOTORS
CONE FOR INTRODUCING A PISTON WITH THE SEGMENTS THEREOF INTO A CYLINDER OF A VEHICLE ENGINE

(30) Priorité: 26.11.2012 FR 1261218
(43) Date de publication de la demande: 30.09.2015
(73) Titulaire: PSA Automobiles SA, 78300 Poissy (FR)
(72) Inventeur: MEUNIER, Sylvain, F-54310 Homecourt (FR)
(74) Mandataire: Bourguignon, Eric Pascal Jean
(86) Numéro de dépôt international: PCT/FR2013/052802
(87) Numéro de publication internationale: WO 2014/080125

(56) Documents cités:
- DE-A1- 4 216 564
- JP-A- H 079 271
- JP-A- H10 128 630
- JP-A- 2005 177 870
- US-B2- 6 880 237

## Description

L'invention porte sur un dispositif pour faciliter l'introduction d'un piston avec ses segments dans un cylindre de moteur de véhicule, en particulier de véhicule automobile.

Actuellement, pour introduire un ensemble de piston avec ses trois segments dans un cylindre de moteur à combustion interne de véhicule, en particulier de véhicule automobile, on utilise un cône d'introduction qui présente une surface interne à simple pente sur une hauteur axiale de l'ordre de 45 mm. Toutefois, lors de l'introduction, la pente du cône en partie supérieure ne guide pas suffisamment le piston avec ses segments ; des segments peuvent se décaler en fond de gorge d'un côté et, par conséquent, sortir de l'autre côté. Dans cette position, le segment peut se casser dans le cône d'introduction sous l'effort de la presse utilisée pour introduire le piston dans le cylindre du moteur.

D'autres solutions sont connues de l'art antérieur pour introduire un piston dans un cylindre de moteur à combustion interne de véhicule. A titre d'exemple, le document US 6880 237 décrit un dispositif pour introduire/mandriner une pièce, en particulier pour aligner un piston avec - et insérer le piston dans - un cylindre. Ce dispositif comprend un mécanisme de poussée pour pousser la pièce vers le cylindre, au moins trois mors (en forme de doigts) de mandrin, qui sont situés sur une circonférence autour d'un axe central, espacés angulairement sur cette circonférence et montés coulissants de façon à pouvoir avancer et se retirer selon des directions radiales par rapport audit axe central. Les surfaces internes des mors de mandrin servent de surfaces de serrage. Les surfaces externes des mors de mandrin sont coniques au moins aux parties d'extrémité desdits mors. Le dispositif de l'invention comprend également des moyens d'entraînement qui comportent un moteur ayant pour fonction, d'une part, de commander l'avance et le retrait des mors selon les directions radiales mentionnées précédemment, et d'autre part, de contrôler la force exercée par les mors de mandrin. On connaît encore le document JPH079271 qui correspond au préambule de la revendication 1.

Le but de la présente invention est de fournir un dispositif pour faciliter l'introduction d'un piston avec ses segments dans un cylindre de moteur de véhicule, en particulier de véhicule automobile, qui permette de garantir un bon montage du piston et de ses segments sans risque de cassure des segments.

Un autre but de la présente invention est de fournir un tel dispositif, qui permette de diminuer substantiellement le pourcentage de moteurs à retoucher ou à démonter après contrôle en bout de ligne de montage desdits moteurs.

Enfin, c'est également un but de la présente invention de fournir un tel dispositif, qui soit de conception et de fabrication simple, qui soit robuste, précis, fiable et économique.

Pour parvenir à ces buts, la présente invention a pour objet un cône d'introduction d'un piston avec ses segments dans un cylindre d'un bloc-cylindres de moteur à combustion interne de véhicule. Ce cône d'introduction présente trois parties monoblocs : une partie de guidage du piston, une semelle pour le positionnement du cône sur la surface plane du bloc-cylindres et une partie inférieure pour le positionnement du cône à l'intérieur d'un cylindre du bloc-cylindres. La partie inférieure présente la forme d'un tube cylindrique destinée au positionnement dudit tube dans le cylindre du moteur, et la partie guidage tubulaire destinée au guidage et à l'insertion du piston avec ses segments et dite « partie d'insertion du piston ». La partie d'insertion du piston présente une surface interne conique comportant, selon la direction axiale du tube, un premier et un second tronçon à pente. Les deux tronçons ont des pentes différentes et sont séparés par un tronçon de raccordement cylindrique de façon à permettre lors de l'insertion du piston le basculement d'une pente à l'autre dans de bonnes conditions.

Selon un mode préféré de réalisation de l'invention, la partie d'insertion du piston n'est pas une partie tubulaire à circonférence complète mais est formée de secteurs angulaires séparés par des espaces axiaux.

Le premier tronçon à pente est situé à la partie supérieure d'entrée de la partie d'insertion du piston, et la pente de ce premier tronçon peut être, par exemple, de l'ordre de 10° d'angle.

La pente du second tronçon peut avantageusement être de l'ordre de 6° d'angle, par exemple.

Le tronçon de raccordement peut présenter un rayon de 100 mm.

Enfin, la longueur axiale de l'ensemble formé par les tronçons à pente et le tronçon de raccordement intermédiaire peut être de l'ordre de 45 mm.

D'autres buts, avantages et caractéristiques de l'invention apparaîtront dans la description qui suit d'un exemple de réalisation, non limitatif de l'objet et de la portée de la présente demande de brevet, accompagnée de dessins dans lesquels :
- la figure 1 est une vue en perspective, schématique, représentant un cône d'introduction guidant un piston et ses segments lors de l'introduction de ce dernier dans un carter cylindres de véhicule automobile, et
- la figure 2 est un exemple de réalisation du cône d'introduction selon la présente invention.

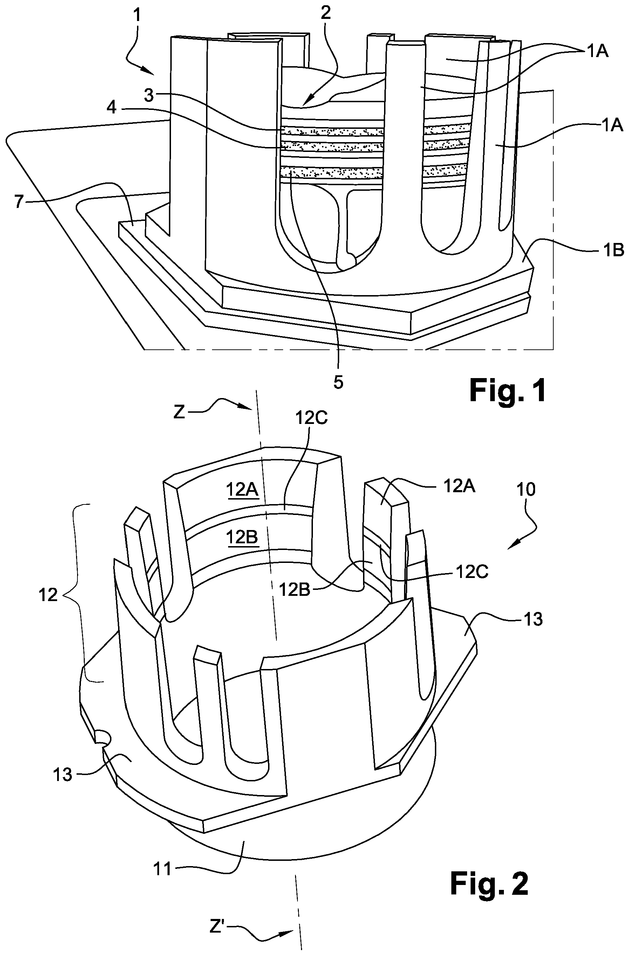

En référence au dessin de la figure 1, on a représenté un cône d'introduction de type connu de l'art antérieur, de référence générale 1, utilisé pour l'introduction d'un piston 2 dans un cylindre de moteur à combustion interne d'un véhicule automobile. Le piston est équipé, de manière classique, de ses trois segments ou anneaux fendus, à savoir le segment de feu 3 proche de la chambre de combustion, le segment d'étanchéité 4 situé au milieu et le segment racleur 5 le plus bas. Le cône d'introduction présente trois parties monobloc : une partie 1A de guidage du piston, une semelle 1B pour le positionnement du cône 1 sur la surface plane 7 du bloc-cylindres et une partie inférieure (sous la semelle 1B) pour le positionnement du cône 1 à l'intérieur d'un cylindre du bloc-cylindres.

Dans les cônes d'introduction classiques, connus de l'art antérieur, tel que celui représenté sur la figure 1 et brièvement décrit ci-dessus, la surface interne de la partie 1A de guidage du piston est conique, c'est-à-dire avec une pente égale à - ou voisine de - 8° d'angle, et cette pente, pour les raisons déjà évoquées précédemment, ne guide pas suffisamment le piston avec ses segments lors de l'introduction de ce dernier dans un cylindre du bloc-moteur.

Pour surmonter cette difficulté, la présente invention propose un dispositif nouveau, de type cône d'introduction également, qui est décrit ci-après en référence au dessin de la figure 2.

Ce dispositif selon l'invention, de référence générale 10, présente la forme d'un tube cylindrique, d'axe longitudinal ZZ', qui comporte, d'une part, une partie inférieure 11, tubulaire, référencée 11, destinée au positionnement dudit tube dans le cylindre du moteur et dite « partie de positionnement dans le cylindre » 11, et d'autre part, une partie supérieure 12, tubulaire, destinée au guidage et à l'insertion du piston avec ses segments et dite « partie d'insertion du piston » 12. La partie d'insertion du piston 12 présente une surface interne conique qui comporte, selon la direction axiale ZZ' du tube, un premier tronçon 12A à pente et un second tronçon 12B à pente, les deux tronçons 12A et 12B ayant des pentes différentes et étant séparés par un tronçon de raccordement 12C, cylindrique, de façon à permettre lors de l'insertion du piston le basculement d'une pente à l'autre dans de bonnes conditions.

La partie d'insertion du piston 12 n'est pas une partie tubulaire à circonférence complète mais est formée de secteurs angulaires séparés par des espaces axiaux. Ces secteurs angulaires peuvent être d'amplitude angulaire différente. A titre d'exemple, on a représenté sur la figure 2 un cône d'introduction selon l'invention dans lequel la partie d'insertion du piston 12 est formée de 7 secteurs, parmi lesquels 3 secteurs de relativement plus grande amplitude que les 4 autres.

A titre d'exemple non limitatif de l'objet et de la portée de la présente invention, la pente du premier tronçon à pente 12A est de l'ordre de 10° d'angle et la pente dudit second tronçon 12B à pente est de l'ordre de 6° d'angle.

A titre d'exemple non limitatif de l'objet et de la portée de la présente invention également, le tronçon de raccordement 12C présente un rayon de 100 mm et la longueur axiale de l'ensemble formé par les tronçons à pente 12A et 12B et le tronçon de raccordement 12C intermédiaire est de l'ordre de 45 mm.

Entre la partie de positionnement dans le cylindre 11 et la partie d'insertion du piston 12, le cône d'introduction présente une semelle 13 pour le positionnement du cône d'introduction sur la surface plane du bloc-cylindres désignée par la référence 7 sur le dessin de la figure 2.

Le dispositif selon l'invention pour faciliter l'introduction d'un piston avec ses segments dans un cylindre de moteur présente de nombreux avantages, parmi lesquels les avantages suivants :
- il permet de garantir un bon montage du piston et de ses segments sans risque de casse des segments,
- il diminue substantiellement le pourcentage de moteurs à retoucher ou à démonter en bout de ligne de montage des moteurs.

## Revendications

1. Cône (10) d'introduction d'un piston (2) avec ses segments (3, 4, 5) dans un cylindre de bloc-cylindres de moteur à combustion interne de véhicule présentant trois parties monoblocs : une partie (12) de guidage du piston, une semelle (13) pour le positionnement du cône sur la surface plane du bloc-cylindres et une partie inférieure (11) pour le positionnement du cône à l'intérieur d'un cylindre du bloc-cylindres, la partie inférieure présentant la forme d'un tube cylindrique destinée au positionnement dudit tube dans le cylindre du moteur, et, la partie de guidage , tubulaire, destinée au guidage et à l'insertion du piston (1) avec ses segments (3, 4, 5) et dite « partie d'insertion du piston » (12), **caractérisé en ce que** ladite partie d'insertion du piston (12) présente une surface interne conique comportant, selon la direction axiale (« ZZ' ») du tube, un premier tronçon (12A) et un second tronçon (12B) à pente, les deux tronçons (12A, 12B) ayant des pentes différentes et étant séparés par un tronçon de raccordement (12C), cylindrique, de façon à permettre lors de l'insertion du piston (2) le basculement d'une pente à l'autre dans de bonnes conditions.

2. Cône d'introduction selon la revendication 1, **caractérisé en ce que** la partie d'insertion du piston (12) n'est pas une partie tubulaire à circonférence complète mais est formée de secteurs angulaires séparés par des espaces axiaux.

3. Cône d'introduction selon l'une quelconque des revendications 1 et 2, **caractérisé en ce que** le premier tronçon (12A) à pente est situé à la partie supérieure d'entrée de la partie d'insertion du piston (12).

4. Cône d'introduction selon l'une quelconque des revendications 1 à 3, **caractérisé en ce que** la pente dudit premier tronçon (12A) à pente est de l'ordre de 10° d'angle.

5. Cône d'introduction selon l'une quelconque des revendications 1 à 4, **caractérisé en ce que** la pente dudit second tronçon (12B) à pente est de l'ordre de 6° d'angle.

6. Cône d'introduction selon l'une quelconque des revendications 1 à 5, **caractérisé en ce que** le tronçon de raccordement (12C) présente un rayon de 100 mm.

7. Cône d'introduction selon l'une quelconque des revendications 1 à 6, **caractérisé en ce que** la longueur axiale de l'ensemble formé par les tronçons à pente (12A, 12B) et le tronçon de raccordement (12C) intermédiaire est de l'ordre de 45 mm.

## Patentansprüche

1. Konus (10) zum Einführen eines Kolbens (2) mit seinen Segmenten (3, 4, 5) in einen Zylinder eines Zylinderblocks einer Fahrzeugbrennkraftmaschine, der drei einstückige Teile aufweist: einen Führungsteil (12) des Kolbens, eine Sohle (13) für die Positionierung des Kegels auf der flachen Oberfläche des Zylinderblocks, und einen unteren Teil (11) für die Positionierung des Kegels in dem Inneren eines Zylinderblocks, wobei der untere Teil die Form einer zylindrischen Röhre aufweist, die zum Positionieren der Röhre in dem Zylinder des Motors bestimmt ist, und den röhrenförmigen Führungsteil, der zum Führen und Einfügen des Kolbens (1) mit seinen Segmenten (3, 4, 5) bestimmt ist und "Einführungsteil des Kolbens" (12) genannt wird,
**dadurch gekennzeichnet, dass** der Einführungsteil des Kolbens (12) eine innere konische Oberfläche aufweist, die entlang der axialen Richtung ("ZZ'") der Röhre einen ersten Abschnitt (12A) und einen zweiten Abschnitt (12B) mit Gefälle umfasst, wobei die zwei Abschnitte (12A, 12B) unterschiedliche Gefälle aufweisen und durch einen zylindrischen Anschlussabschnitt (12C) derart getrennt sind, dass sie bei dem Einfügen des Kolbens (2) das Kippen von einem Gefälle zu dem anderen unter guten Bedingungen gestatten.

2. Einführkonus nach Anspruch 1, **dadurch gekennzeichnet, dass** der Einfügeteil des Kolbens (12) kein röhrenförmiger Teil mit vollständigem Umfang ist, sondern aus Winkelsektoren, die durch axiale Räume getrennt sind, gebildet ist.

3. Einführkonus nach einem der Ansprüche 1 und 2, **dadurch gekennzeichnet, dass** der erste Abschnitt (12A) mit Gefälle an dem oberen Eingangsteil des Einfügeteils des Kolbens (12) liegt.

4. Einführkonus nach einem der Ansprüche 1 bis 3, **dadurch gekennzeichnet, dass** das Gefälle des ersten Abschnitts (12A) mit Gefälle in der Größenordnung von 10 Winkelgrad liegt.

5. Einführkonus nach einem der Ansprüche 1 bis 4, **dadurch gekennzeichnet, dass** das Gefälle des zweiten Abschnitts (12B) mit Gefälle in der Größenordnung von 6 Winkelgrad liegt.

6. Einführkonus nach einem der Ansprüche 1 bis 5, **dadurch gekennzeichnet, dass** der Anschlussabschnitt (12C) einen Radius von 100 mm aufweist.

7. Einführkonus nach einem der Ansprüche 1 bis 6, **dadurch gekennzeichnet, dass** die axiale Länge der Einheit, die von den Abschnitten mit Gefälle (12A, 12B) und dem Zwischenanschlussabschnitt (12C) gebildet wird, in der Größenordnung von 45 mm liegt.

## Claims

1. A cone (10) for introducing a piston (2) with segments (3, 4, 5) thereof into a cylinder-block cylinder of a vehicle internal combustion engine having three one-piece portions: a portion (12) for guiding the piston, a base (13) for the positioning of the cone on the planar surface of the cylinder block and a lower portion (11) for the positioning of the cone in the interior of a cylinder of the cylinder block, the lower portion having the form of a cylindrical tube intended for the positioning of said tube in the cylinder of the engine, and, the tubular guiding portion intended for the guiding and the insertion of the piston (1) with its segments (3, 4, 5) and designated "piston insertion portion" (12),
**characterized in that** said piston insertion portion (12) has a conical internal surface comprising, along the axial direction ("ZZ'") of the tube, a first (12A) and a second (12B) sloping section, the two sections (12A, 1B) having different slopes and being separated by a cylindrical connection section (12C), so as to permit, during the insertion of the piston (2), the tilting from one slope to the other under good conditions.

2. The introduction cone according to Claim 1, **characterized in that** the piston insertion portion (12) is not a tubular portion with complete circumference, but is formed of angular sectors separated by axial spaces.

3. The introduction cone according to any one of Claims 1 and 2, **characterized in that** the first sloping section (12A) is situated at the upper entry portion of the piston insertion portion (12).

4. The introduction cone according to any one of Claims 1 to 3, **characterized in that** the slope of said first sloping section (12A) is in the order of an angle of 10°.

5. The introduction cone according to any one of Claims 1 to 4, **characterized in that** the slope of said second sloping section (12B) is in the order of an angle of 6°.

6. The introduction cone according to any one of Claims 1 to 5, **characterized in that** the connection section (12C) has a radius of 100 mm.

7. The introduction cone according to any one of Claims 1 to 6, **characterized in that** the axial length of the assembly formed by the sloping sections (12A, 12B) and the intermediate connection section (12C) is in the order of 45 mm.
